# EUROPEAN PATENT APPLICATION

(11) **EP 4 819 131 A1**
(43) Date of publication of application: **07.10.2026**
(21) Application number: 25305472.0
(22) Date of filing: 31.03.2025
(51) Int. Cl.: G10L 17/26, G10L 19/008

(54) **METHODS AND APPARATUS TO PERFORM DEEPFAKE DETECTION BASED ON AUDIO CHARACTERISTICS**

(71) Applicant: McAfee, LLC, San Jose, CA 95002 (US)
(72) Inventor: LEVY, Romain, 92130 Issy-Les-Moulineaux (FR); DEVANE, Oliver, Upton, HP17 8UA (GB); FITZGERALD, Niall, Cork (IE)
(74) Representative: Icosa

(57) **Abstract**

Example instructions cause programmable circuitry to determine a first value by comparing a first subset of a first channel of audio data to a first subset of a second channel of the audio data, the first subset of the first channel of the audio data and the first subset of the second channel of the audio data corresponding to a first duration of time; and determine a second value by comparing a second subset of the first channel of the audio data to a second subset of the second channel of the audio data, the second subset of the first channel of the audio data and the second subset of the second channel of the audio data corresponding to a second duration of time; and tag media corresponding to the audio data as a deep fake based on the first value mismatching the second value.

## Description

### FIELD OF THE DISCLOSURE

This disclosure relates generally to artificial intelligence, and, more particularly, to methods and apparatus to perform deepfake detection based on audio characteristics.

### BACKGROUND

A deepfake is media (e.g., an image, video, and/or audio) that was generated and/or modified using artificial intelligence. In some examples, a deepfake creator may combine and/or superimpose existing images and/or video onto a source image and/or video to generate the deepfake. As artificial intelligence (e.g., neural networks, deep learning, machine learning, and/or any other artificial intelligence technique) advances, deepfake media has become increasingly realistic and may be used to generate fake news, pranks, and/or to commit fraud.

### BRIEF DESCRIPTION OF THE DRAWINGS

FIG. 1 is a block diagram of an example computing device in which an example deepfake detection circuitry operates to perform deepfake detection based on audio characteristics.
FIG. 2 is a block diagram of an example implementation of the deepfake detection circuitry of FIG. 1.
FIGS. 3A and 3B illustrate a flowchart representative of example machine readable instructions and/or example operations that may be executed, instantiated, and/or performed by example programmable circuitry to implement the deepfake detection circuitry of FIG. 2.
FIG. 4 is a block diagram of an example processing platform including programmable circuitry structured to execute, instantiate, and/or perform the example machine readable instructions and/or perform the example operations of FIGS. 3A and 3B to implement the deepfake detection circuitry of FIG. 2.
FIG. 5 is a block diagram of an example implementation of the programmable circuitry of FIG. 4.
FIG. 6 is a block diagram of another example implementation of the programmable circuitry of FIG. 4.

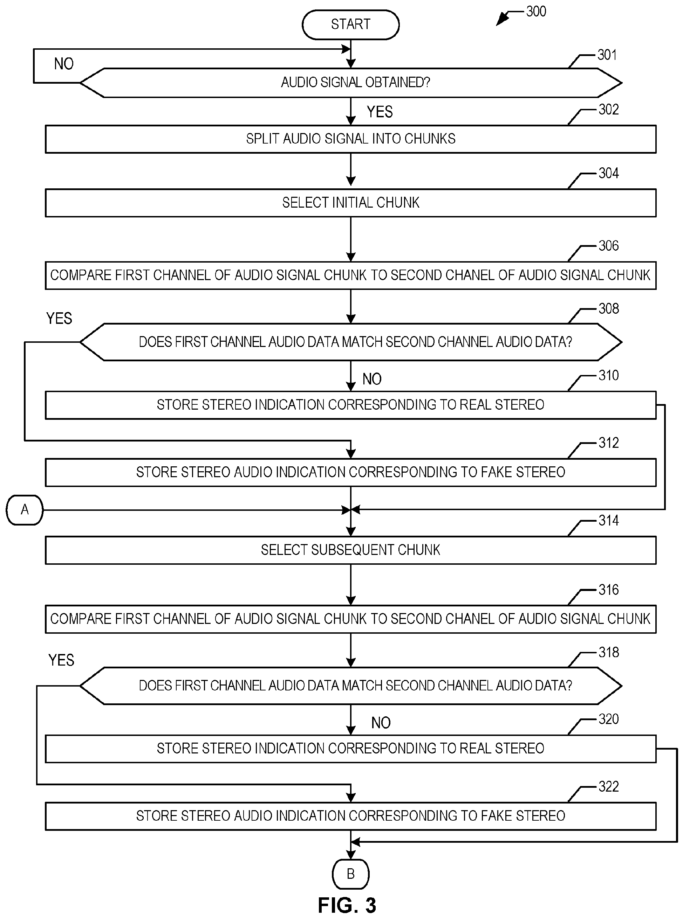

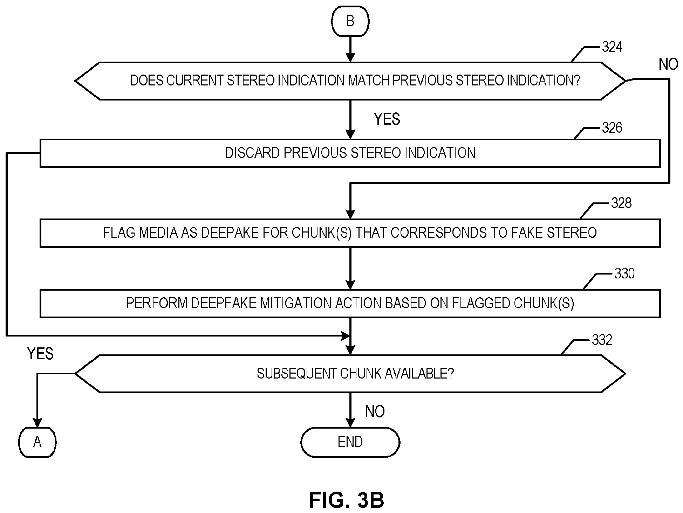

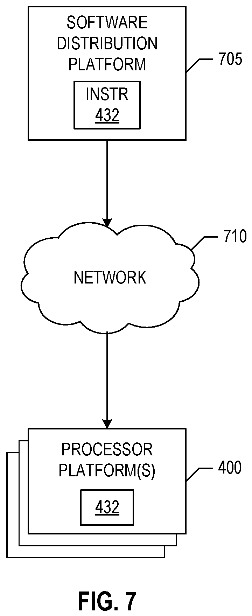

FIG. 7 is a block diagram of an example software/firmware/instructions distribution platform (e.g., one or more servers) to distribute software, instructions, and/or firmware (e.g., corresponding to the example machine readable instructions of FIGS. 3A and 3B) to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

In general, the same reference numbers will be used throughout the drawing(s) and accompanying written description to refer to the same or like parts. The figures are not necessarily to scale.

### DETAILED DESCRIPTION

As open-source materials become readily available and computing technology advances, more people have access to a larger variety of tools to create more advanced software. As more advanced software is developed, the ability to use such software for malicious purposes increases. For example, the production of deepfakes has significantly increased. Such software may be used to create fake videos of people (e.g., celebrities or politicians) that misrepresent them by manipulating their identity, words, and/or actions. As artificial intelligence (AI) advances, deepfakes are becoming increasingly realistic. Being able to identify and detect deepfakes accurately is important, as deepfakes could be detrimental (e.g., fake emergency alerts, fake videos to destroy someone's reputation, or fake video and/or audio of politicians during an election).

Because deepfakes can be convincing, it can be difficult and possibly impossible for humans to identify "real" (e.g., authentic) media as opposed to "deepfake" media. AI can be used to process and analyze a media file (e.g., an audio file or a video file) to classify it as "real" or "deepfake" based on whether the audio features of the media match the video features of the media. However, the use of AI based models requires a large amount of resources (e.g., memory resources, power resources, processing resources, etc.) and are computationally heavy. Thus, running AI for media may result in power inefficiency, wear of resources, increased heat consumption, etc.

Although unaided humans may not be able to differentiate real media from deepfake media, there are characteristics of the media that a processing device can identify that a human cannot. For example, most audio from media is presented in stereo. In stereo audio, the audio signal includes two channels (a left channel and a right channel). The audio signal for the two channels are different for stereo audio. However, when deepfake media is generated, the audio is typically generated as mono audio. Mono audio only includes a single channel. The mono audio is then applied to the two channels of the media to generate "fake" stereo (e.g., mono audio that is output to both channels). As used herein, "Fake" stereo refers to audio where the audio data of both channels are the same. Accordingly, deepfake media or a portion of media that is deepfake can be identified based on a change in audio from stereo to fake stereo or vice versa.

Although the human ear can identify stereo vs fake stereo for produced audio (e.g., audio recorded, mixed, and/or edited by an audio engineer), such as music, the human ear cannot identify stereo vs fake stereo for speech or unproduced audio (e.g., audio recorded by a sensor without being mixed and/or edited by an audio engineer). For example, for produced audio, one instrument may be output via a first channel and a second instrument may be output via a second channel. However, for speech or unproduced audio, all audio is typically output via both channels. The two channels for speech or unproduced audio will be slightly different, but not different enough for a human to be able to distinguish.

Accordingly, in some examples disclosed herein process audio from two audio channels to identify media that transition to/from stereo (associated with real media) from/to fake stereo (associated with fake media). Examples disclosed herein generate a stereo indication (e.g., real stereo or fake stereo) based on a comparison of a sample of the audio signal for the first channel of the sample of the audio signal for the second channel to see if they are the same or different. Examples disclosed herein compare the stereo indication of the sample of the audio signal to a previous stereo indication for a previous sample of the audio signal. If the stereo indication changes (e.g., from a real stereo indication to a fake stereo indication or vice versa), some examples disclosed herein tag the media as deepfake. In some examples disclosed herein, the portion of the media corresponding to fake stereo is tagged as being deepfake.

If media has been classified as deepfake, examples disclosed herein may perform one or more different actions to flag, warn, and/or mitigate issues related to the deepfake media. For example, if the deepfake media was output by a website, examples disclosed herein may send a flag to the company that owns or monitors the website to warn the company of the potential deepfake media. Additionally or alternatively, examples disclosed herein may block the media, blur the media, pause the media, and/or output a popup or other warning message to a user that the media is a deepfake. In some examples, the blurring, blocking, pausing, and/or the popup may remain until a user indicates that they acknowledge that the media is a deepfake. Additionally or alternatively, the deepfake media and/or information corresponding to the deepfake media may be transmitted to a server (e.g., a government owned, a computer owned server, etc.) to track the use of deepfake media. Additionally or alternatively, the deepfake media and/or information corresponding to the deepfake media may be transmitted to a server corresponding to the training of the deepfake detection models to further tune or adjust deepfake detection models.

Additionally or alternatively, the identification of a deepfake may trigger more detailed analysis of the audio using another deepfake detection model (e.g., an AI-based model). As described above, the use of known AI-based models for deepfake detection results in a large amount of resource consumption. In contrast, examples disclosed herein reduce resource consumption by disabling the AI-based model unless a deepfake is indicated via the stereo audio detection disclosed herein, which utilize significantly less resources than the AI-based model. Accordingly, examples disclosed herein acheive accurate deepfake detection with less resources than techniques that only use AI-based deepfake detection models.

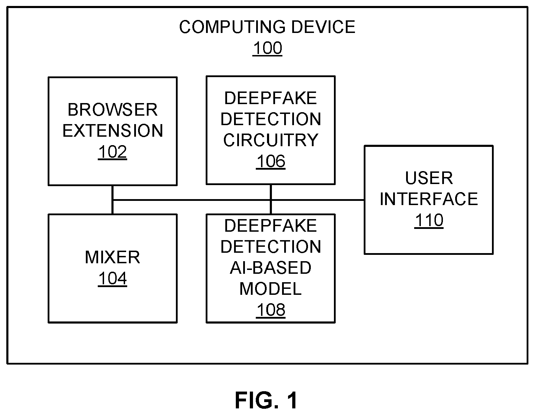

FIG. 1 is a block diagram of an example computing device 100 constructed in accordance with teachings disclosed herein. The computing device 100 may be implemented by a computer (e.g., a desktop computer, a server, etc.), a mobile device (e.g., a smart phone, a tablet, a laptop, etc.), a smart television, and/or any other device capable of outputting media. The computing device 100 of the illustrated example includes an example browser extension 102, an example mixer 104, example deepfake detection circuitry 106, an example deepfake detection AI-based model 108, and an example user interface 110. However, some of the elements are omitted in some examples. For example, some implementation may omit the AI-based model 108.

The browser extension 102 of FIG. 1 accesses an audio signal from media played via a browser. For example, if a browser is streaming media, the browser extension 102 can access and/or record the audio signal from the streaming media that is played on the browser. The audio signal includes a first channel portion and a second channel portion. The first channel may correspond to audio output via a first (e.g., left) speaker and second channel portion may correspond to audio output via a second (e.g., right) speaker. The browser extension 102 provides the audio signal to the deepfake detection circuitry 106.

The mixer 104 of FIG. 1 is a hardware device and/or software that combines, adjust and/or controls audio sources of the computing device 100. The mixer 102 obtains and/or records audio signals from media being played on the computing device 100. As described above, the audio signal includes a first channel portion and a second channel portion. The first channel may correspond to audio output via a first (e.g., left) speaker and the second channel portion may correspond to audio output via a second (e.g., right) speaker. The mixer 104 provides the audio signal to the deepfake detection circuitry 106.

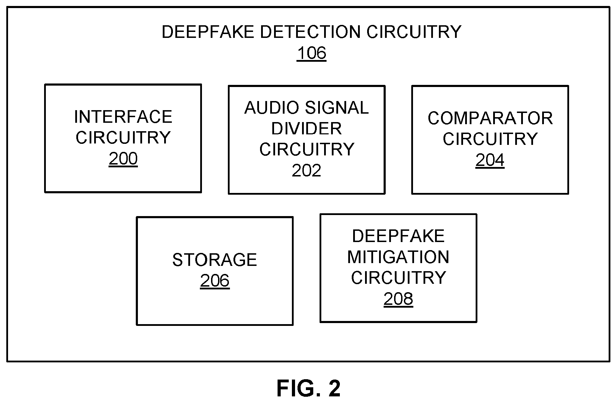

The deepfake detection circuitry 106 of FIG. 1 receives an audio signal (e.g., including first channel audio data and second channel audio data) from the browser extension 102, the mixer 104, and/or any other device that outputs a digital audio signal. The deepfake detection circuitry 106 compares the audio data from the first channel of the audio signal to the audio data from the second channel of the audio signal to determine if the audio is in stereo (e.g., the first channel audio data is the same as the second channel audio data) or in fake stereo (e.g., the first channel audio data is different than the second channel audio data). Because the audio signal is typically a digital signal, the deepfake detection circuitry 106 can compare the audio float values for the first channel to the audio float values for the second channel to see if the float channels are the same or different. An audio float value is a numerical representation of sound data stored in a floating-point format. The deepfake detection circuitry 106 can identify a deepfake based on a change in the audio from fake stereo to real stereo or vice versa at different points in time. For example, if the deepfake detection circuitry 106 determines that the audio is stereo audio for the first 30 seconds of the media and identifies a change to fake stereo audio at the 31^{st} second of the media, the deepfake detection circuitry 106 identifies the media as deepfake beginning at the 31^{st} second. The deepfake detection circuitry 106 (which may be implemented by a comparator) can perform one or more mitigating actions based on an identification of deepfake media. Example implementations of the deepfake detection circuitry 106 is further described below in conjunction with FIG. 2.

The deepfake detection AI-based model 108 of FIG. 1 is an AI-based model (e.g., a neural network, a machine learning model, a deep learning model, etc.) that can analyze media (e.g., the audio and/or video data associated with media) to identify a deepfake. As described above, an AI-based model utilizes a large amount of resources to operate. Thus, in some examples, the deepfake detection circuitry 106 may trigger the deepfake detection AI-based model 108 to further analyze the media in response to a potential deepfake detection by the deepfake detection circuitry 106. Because the deepfake detection circuitry 106 utilizes significantly less resources than the deepfake detection AI-based model 108, significant resources can be conserved by substantially utilizing the AI-based model 108 (e.g., only activating after the deepfake detection circuitry 106 has flagged the media based on its own analysis).

The user interface 110 of FIG. 1 outputs media to a user. For example, the user interface 100 may include a display, a touch screen, a speaker, etc. for outputting media to a user. In some examples, the deepfake detection circuitry 106 can generate a deepfake alert. In such examples, the user interface 110 may display, and/or otherwise output, the alert to the user. For example, the alert may include a visual and/or audio indication (e.g., playing a sound, outputting a popup, blurring the video, muting or distorting the audio, etc.) that the media being output is a deepfake. In some examples, the user may need to indicate awareness of the deepfake to remove the alert and/or continue displaying the media.

FIG. 2 is a block diagram of an example implementation of the deepfake detection circuitry 106 of FIG. 1. The deepfake detection circuitry 106 of FIG. 2 may be instantiated (e.g., creating an instance of, bring into being for any length of time, materialize, implement, etc.) by programmable circuitry such as a Central Processor Unit (CPU) executing first instructions, a field programmable gate array, a programmable logic device (PLD), a generic array logic (GAL) device, a programmable array logic (PAL) device, a complex programmable logic device (CPLD), a simple programmable logic device (SPLD), a microcontroller (MCU), a programmable system on chip (PSoC), etc. Additionally or alternatively, the deepfake detection circuitry 106 of FIG. 2 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 2 may, thus, be instantiated at the same or different times. Some or all of the circuitry of FIG. 2 may be instantiated, for example, in one or more threads executing concurrently on hardware and/or in series on hardware. Moreover, in some examples, some or all of the circuitry of FIG. 2 may be implemented by microprocessor circuitry executing instructions and/or FPGA circuitry performing operations to implement one or more virtual machines and/or containers. The deepfake detection circuitry 106 of FIG. 2 includes example interface circuitry 200, example audio signal divider circuitry 202, example comparator circuitry 204, example storage 206, and example deepfake mitigation circuitry 208.

The interface circuitry 200 of FIG. 2 obtains an audio signal from the browser extension 102, the mixer 104, and/or any other device capable of outputting an audio signal. As described above, the audio signal includes two portions a first channel portion and a second channel portion. Additionally, the interface circuitry 200 may also transmit instructions to the deepfake detection AI-based model 108 to initiate an AI-based scan of the media. Additionally, the interface circuitry 200 may transmit instructions to the user interface 110 to output a deepfake identification alert to a user. In some examples, the interface circuitry 200 is instantiated by programmable circuitry executing interface circuitry instructions (e.g., an API) and/or configured to perform operations such as those represented by the flowchart(s) of FIG. 3A and/or 3B.

The audio signal divider circuitry 202 of FIG. 2 divides an audio signal into chunks (e.g., groups, portions, subsets, etc.) based on a duration of time. For example, the audio signal divider circuitry 202 may break an audio signal into one second chunks. In this manner, the comparator circuitry 204 can compare the first channel audio data with the second channel audio data for the same duration of time. If the media is being processed in real time or near real time, the audio signal divider circuitry 202 can divide the audio into chucks based on a duration of time as the audio signal is being obtained and/or buffered. For example, as the audio signal is being obtained and/or buffered, the audio signal divider circuitry 202 can generate an audio chunk at predefined durations (e.g., 1 second) of audio. In some examples, the signal divider circuitry 202 is instantiated by programmable circuitry executing signal divider circuitry instructions and/or configured to perform operations such as those represented by the flowchart(s) of FIG. 3A and/or 3B.

The comparator circuitry 204 of FIG. 2 compares the first channel audio data to the second channel audio data for a chunk of the audio (e.g., a one second sample). The audio data for each channel includes float values. For example, if the sample rate of the audio signal is 16 Kilohertz (kHz), for a one second chuck, each channel will have 16 thousand float values (sometimes referred to herein as "floats"). A float is a ++

+
+value that corresponds to a sample of the audio signal. Accordingly, the comparator circuitry 204 compares the floats of the first channel of a chunk signal to respective ones of the floats of the second channel of the chunk of the audio signal (e.g., the first float value of the first channel to the first float value of the second channel, the second float value of the first channel to the second float value of the second channel, etc. wherein the float values are synchronized based on time of presentation). If the comparator circuitry 204 determines that the first channel audio data matches the second channel audio data for a chunk of the audio signal, the comparator circuitry 204 outputs a first stereo indication value that corresponds to fake stereo. If the comparator circuitry 204 determines that the first channel audio data mismatches the second channel audio data for a chunk of the audio signal, the comparator circuitry 204 outputs a second stereo indication value that corresponds to real stereo. Additionally, the comparator circuitry 204 compares a first stereo indication value of a current comparison to a second stereo indication value of a previous comparison to see if the audio has changed from real stereo to fake stereo or vice versa. If the comparator circuitry 204 determines that the current stereo indication value matches the previous stereo indication value, the comparator circuitry 204 outputs a deepfake indication value corresponding to no deepfake. If the comparator circuitry 204 determines that the current stereo indication value mismatches the previous stereo indication value, the comparator circuitry 204 outputs a deepfake indication value corresponding to a deepfake. In some examples, the comparator circuitry 204 may include two comparators (e.g., a first comparator for audio channel data comparisons and a second comparator for the change in stereo indication comparisons). In some examples, the comparator circuitry 204 is instantiated by programmable circuitry executing comparator circuitry instructions and/or configured to perform operations such as those represented by the flowchart(s) of FIG. 3A and/or 3B.

The storage 206 of FIG. 2 stores a previous stereo indication value. In this manner, the comparator circuitry 204 can compare a current stereo indication value to a previous indication value. The storage 206 may be implemented by a database, memory, a buffer, cache, registers, flip flops, etc.

The example deepfake mitigation circuitry 208 of FIG. 2 generates an alert based on the deepfake indication value output by the comparator circuitry 204 (e.g., corresponding to whether the media is authentic or a deepfake). In some examples, the deepfake mitigation circuitry 208 can generate a report related to the media and cause transmission of the report to an external device for logging and/or model training purposes. The report may be a document and/or a signal. The deepfake mitigation circuitry 208 may include the information related to the media in the report (e.g., the type of media, origin of the media, a timestamp of when the media was output, when the media was created, metadata corresponding to the media, where the media was output or obtained from, etc.) and/or may include the media file itself. The information may also include identifier(s) indicating which portion(s) of the media are deepfake (e.g., based on the points in time determined as corresponding to a change between real stereo and fake stereo).

In some examples, the deepfake mitigation circuitry 208 may cause actions to occur at the processing device 108 in response to a determination that the media is a deepfake. For example, the deepfake mitigation circuitry 208 may cause the media to be stopped, paused, and/or blocked. Additionally or alternatively, the deepfake mitigation circuitry 208 may display a warning, popup, and/or any other audio and/or visual indication for the processing device 108 that the media is a deepfake. In some examples, the deepfake mitigation circuitry 208 may pause the media, blur the media, distort the audio, mute the audio, etc. and ask a user to confirm that they are aware that the media is a deepfake before continuing to watch, stream, and/or download the media. In some examples, the deepfake mitigation circuitry 208 can also generate an alert indicating the end of a deepfake portion of the media and/or undue the mitigation techniques (e.g., remove the popup, resume the media, rewind the media, unblur, undistort, or unmute the media, etc.) after the end of the deepfake has been identified. In some examples, the deepfake mitigation circuitry 208 may trigger the deepfake detection AI-based model 108 to further analyze the media in response to a deepfake indication. In some examples, the deepfake mitigation circuitry 208 is instantiated by programmable circuitry executing deepfake mitigation circuitry instructions and/or configured to perform operations such as those represented by the flowchart(s) of FIG. 3A and/or 3B.

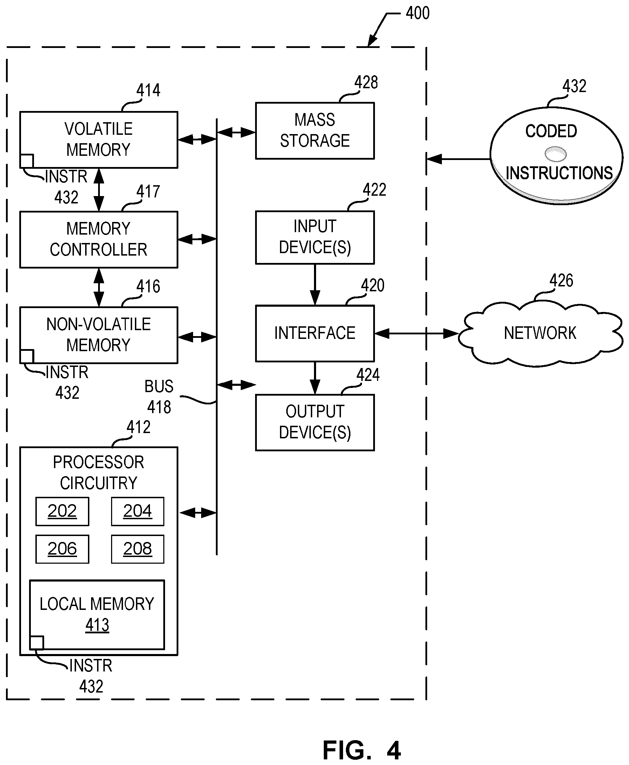

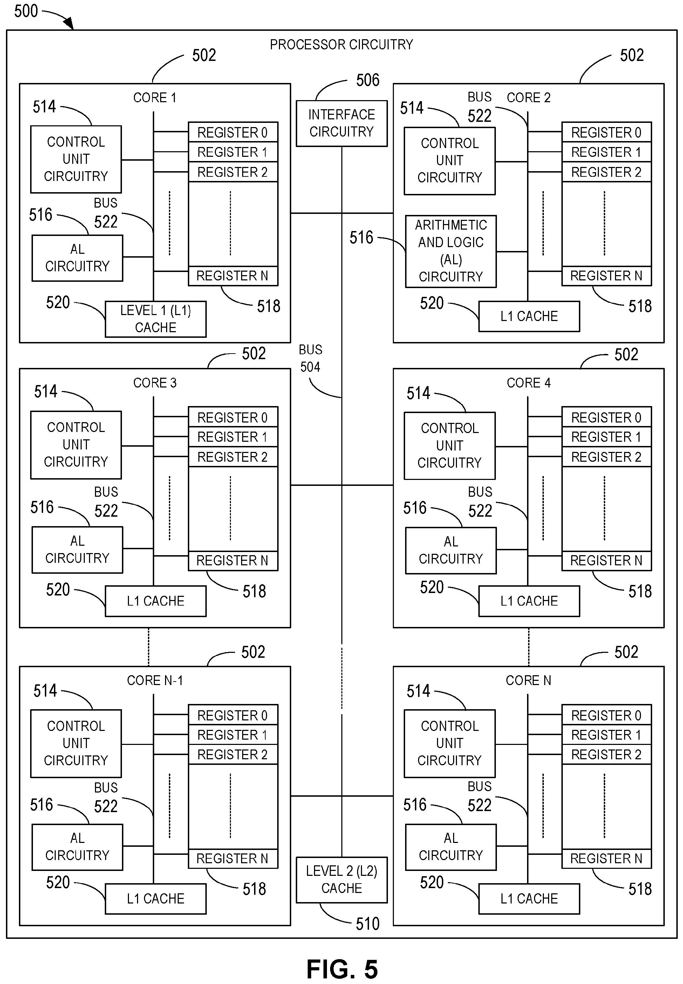

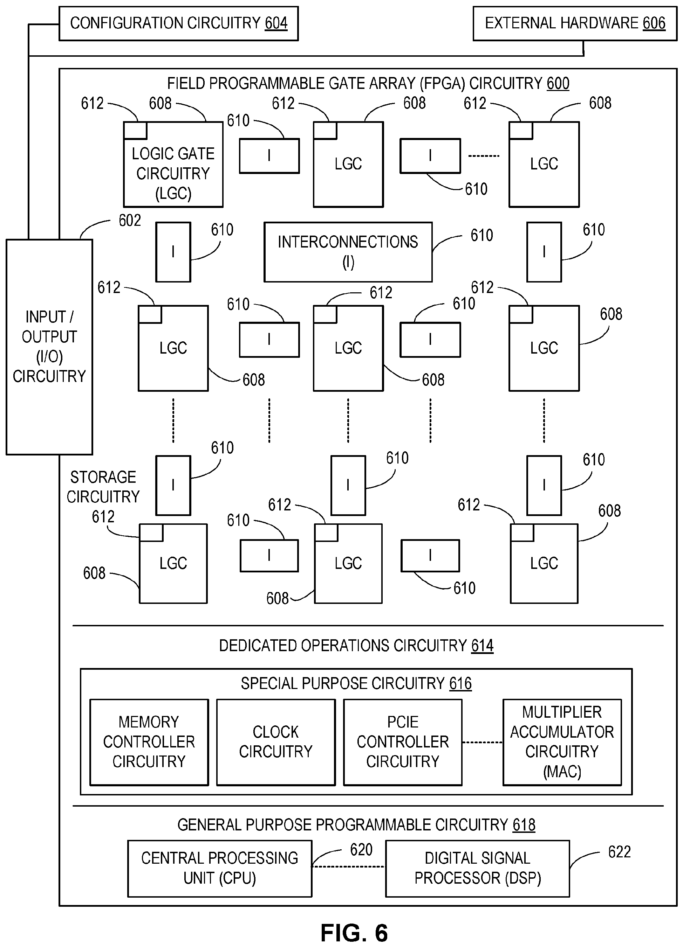

In some examples, the deepfake detection circuitry 106 includes means for obtaining an audio signal, means for splitting audio into chunks, means for comparing audio signals, means for storing indications, and means for mitigating a deepfake. For example, the means for obtaining may be implemented by the interface circuitry 200, the means for splitting may be implemented by the audio signal divider circuitry 202, the means for comparing may be implemented by the comparator circuitry 200, the means for storing may be implemented by the storage 200, and the means for mitigating may be implemented by the deepfake mitigation circuitry 208. In some examples, the interface circuitry 200, the audio signal divider circuitry 202, the comparator circuitry 204, the storage 206, and/or the deepfake mitigation circuitry 208 may be instantiated by programmable circuitry such as the example programmable circuitry 412 of FIG. 4. For instance, the interface circuitry 200, the audio signal divider circuitry 202, the comparator circuitry 204, the storage 206, and/or the deepfake mitigation circuitry 208 may be instantiated by the example microprocessor 500 of FIG. 5 executing machine executable instructions such as those implemented by at least blocks 302-332 of FIGS. 3A and 3B In some examples, the interface circuitry 200, the audio signal divider circuitry 202, the comparator circuitry 204, the storage 206, and/or the deepfake mitigation circuitry 208 may be instantiated by hardware logic circuitry, which may be implemented by an ASIC, XPU, or the FPGA circuitry 600 of FIG. 6 configured and/or structured to perform operations corresponding to the machine readable instructions. Additionally or alternatively, the interface circuitry 200, the audio signal divider circuitry 202, the comparator circuitry 204, the storage 206, and/or the deepfake mitigation circuitry 208 may be instantiated by any other combination of hardware, software, and/or firmware. For example, the interface circuitry 200, the audio signal divider circuitry 202, the comparator circuitry 204, the storage 206, and/or the deepfake mitigation circuitry 208 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

While an example manner of implementing the deepfake detection circuitry 106 of FIG. 1 is illustrated in FIG. 2, one or more of the elements, processes, and/or devices illustrated in FIG. 2 may be combined, divided, rearranged, omitted, eliminated, and/or implemented in any other way. Further, the interface circuitry 200, the audio signal divider circuitry 202, the comparator circuitry 204, the storage 206, and/or the deepfake mitigation circuitry 208, and/or, more generally, the example deepfake detection circuitry 106 of FIG. 2, may be implemented by hardware alone or by hardware in combination with software and/or firmware. Thus, for example, any of the interface circuitry 200, the audio signal divider circuitry 202, the comparator circuitry 204, the storage 206, and/or the deepfake mitigation circuitry 208, and/or, more generally, the example deepfake detection circuitry 106, could be implemented by programmable circuitry, processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), vision processing unit(s), (VPUs), and/or field programmable logic device(s) (FPLD(s)) such as FPGAs in combination with machine readable instructions (e.g., firmware or software). Further still, the example deepfake detection circuitry 106 of FIG. 2 may include one or more elements, processes, and/or devices in addition to, or instead of, those illustrated in FIG. 2, and/or may include more than one of any or all of the illustrated elements, processes and devices.

Flowchart(s) representative of example machine readable instructions, which may be executed by programmable circuitry to implement and/or instantiate the deepfake detection circuitry 106 of FIG. 2 and/or representative of example operations which may be performed by programmable circuitry to implement and/or instantiate the deepfake detection circuitry 106 of FIG. 2, are shown in FIGS. 3A and 3B. The machine readable instructions may be one or more executable programs or portion(s) of one or more executable programs for execution by programmable circuitry such as the programmable circuitry 412 shown in the example processor platform 400 discussed below in connection with FIG. 4 and/or may be one or more function(s) or portion(s) of functions to be performed by the example programmable circuitry (e.g., an FPGA) discussed below in connection with FIGS. 5 and/or 6. In some examples, the machine readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer readable and/or machine readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer readable and/or machine readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer readable storage medium may include one or more mediums. Further, although the example program is described with reference to the flowchart(s) illustrated in FIGS. 3A and 3B, many other methods of implementing the example deepfake detection circuitry 106 may alternatively be used. For example, the order of execution of the blocks of the flowchart(s) may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). As used herein, programmable circuitry includes any type(s) of circuitry that may be programmed to perform a desired function such as, for example, a CPU, a GPU, a VPU, and/or an FPGA. The programmable circuitry may include one or more CPUs, one or more GPUs, one or more VPUs, and/or one or more FPGAs located in the same package (e.g., the same integrated circuit (IC) package or in two or more separate housings), one or more CPUs, one or more GPUs, one or more VPUs, and/or one or more FPGAs in a single machine, multiple CPUs, GPUs, VPUs, and/or FPGAs distributed across multiple servers of a server rack, and/or multiple CPUs, GPUs, VPUs, and/or FPGAs distributed across one or more server racks. Additionally or alternatively, programmable circuitry may include a programmable logic device (PLD), a generic array logic (GAL) device, a programmable array logic (PAL) device, a complex programmable logic device (CPLD), a simple programmable logic device (SPLD), a microcontroller (MCU), a programmable system on chip (PSoC), etc., and/or any combination(s) thereof in any of the contexts explained above.

The machine readable instructions described herein may be stored in one or more of a compressed format, an encrypted format, a fragmented format, a compiled format, an executable format, a packaged format, etc. Machine readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine readable instructions may be fragmented and stored on one or more storage devices, disks and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable, computer readable and/or machine readable media, as used herein, may include instructions and/or program(s) regardless of the particular format or state of the machine readable instructions and/or program(s).

The machine readable instructions described herein can be represented by any past, present, or future instruction language, scripting language, programming language, etc. For example, the machine readable instructions may be represented using any of the following languages: C, C++, Java, C-Sharp, Perl, Python, JavaScript, HyperText Markup Language (HTML), Structured Query Language (SQL), Swift, etc.

As mentioned above, the example operations of FIGS. 3A and 3B may be implemented using executable instructions (e.g., computer readable and/or machine readable instructions) stored on one or more non-transitory computer readable and/or machine readable media. As used herein, the terms non-transitory computer readable medium, non-transitory computer readable storage medium, non-transitory machine readable medium, and/or non-transitory machine readable storage medium are expressly defined to include any type of computer readable storage device and/or storage disk and to exclude propagating signals and to exclude transmission media. Examples of such non-transitory computer readable medium, non-transitory computer readable storage medium, non-transitory machine readable medium, and/or non-transitory machine readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer readable storage device" and "non-transitory machine readable storage device" are defined to include any physical (mechanical, magnetic, and/or electrical) hardware to retain information for a time period, but to exclude propagating signals and to exclude transmission media. Examples of non-transitory computer readable storage devices and/ or non-transitory machine readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer readable instructions, machine readable instructions, etc., and/or manufactured to execute computer-readable instructions, machine-readable instructions, etc.

FIGS. 3A and 3B includes a flowchart representative of example machine readable instructions and/or example operations 300 that may be executed, instantiated, and/or performed by programmable circuitry to detect and/or mitigate deepfakes in media. The example machine-readable instructions and/or the example operations 300 of FIG. 3 begin at block 301, at which the audio signal divider circuitry 202 determines if an audio signal is obtained via the interface circuitry 200. The audio signal includes float values for a first channel and float values for a second value for the same duration of time.

If the audio signal divider circuitry 202 determines that an audio signal has not been obtained (block 301: NO), control returns to block 301. If the audio signal divider circuitry 202 determines that an audio signal has been obtained (block 301: YES), the audio signal divider circuitry 202 splits the audio signal into chunks (e.g., half a second chunks, 1 second chunks, 5 second chunks, etc.) (block 302). In some examples, the audio signal may be obtained in real-time or near real-time. In such examples, the audio signal divider circuitry 202 may continuously store the incoming float values for each channel until a threshold amount of time to generate chunks as the audio is coming in in real-time or near real-time.

At block 304, the comparator circuitry 204 selects an initial chunk of the audio signal. At block 306, the comparator circuitry 204 compares the first channel audio data of the audio signal chunk to the second channel audio data of the audio signal chunk. For example, the comparator circuitry 204 compares corresponding float values of the first channel audio data to the second channel audio data to see if all the float values match for the chunk of audio, as further described above in conjunction with FIG. 2.

At block 308, the comparator circuitry 204 determines if the first channel audio data of the audio signal chunk matches the second channel audio data of the audio signal chunk. If the comparator circuitry 204 determines that the first channel audio data does not match the second channel audio data (block 308: NO), the storage 206 stores a real stereo indication (block 310). If the comparator circuitry 204 determines that the first channel audio data matches the second channel audio data (block 308: YES), the storage 206 stores a fake stereo indication (block 312).

At block 314, the comparator circuitry 204 selects a subsequent chunk of the audio signal. At block 316, the comparator circuitry 204 compares the first channel audio data of the audio signal chunk to the second channel audio data of the audio signal chunk. At block 318, the comparator circuitry 204 determines if the first channel audio data of the audio signal chunk matches the second channel audio data of the audio signal chunk. If the comparator circuitry 204 determines that the first channel audio data does not match the second channel audio data (block 318: NO), the storage 206 stores a stereo indication corresponding to real stereo (block 320). If the comparator circuitry 204 determines that the first channel audio data matches the second channel audio data (block 318: YES), the storage 206 stores a stereo indication corresponding to fake stereo (block 322).

At block 324 of FIG. 3B, the comparator circuitry 204 determines if the current stereo indication matches the previous stereo indication. If the comparator circuitry 204 determines that the current stereo indication matches the previous stereo indication (block 324: YES), the storage 206 discards the previous stereo indication (block 326) and control continues to block 322. In this manner, the current stereo indication becomes the previous stereo indication for a subsequent comparison. If the comparator circuitry 204 determines that the current stereo indication does not match the previous stereo indication (block 324: NO), the deepfake mitigation circuitry 208 flags the media as a deepfake for the chunk(s) that correspond to fake stereo (block 328). For example, if the stereo indication changed from real stereo to fake stereo, the deepfake mitigation circuitry 208 flags the current portion of the media as a deepfake. If the stereo indication changed from fake stereo to real stereo, the deepfake mitigation circuitry 208 flags the previous portion of the media as a deepfake.

At block 330, the deepfake mitigation circuitry 208 performs one or more deepfake mitigation actions based on the flagged chunk(s). For example, the deepfake mitigation circuitry 208 may output an alert to a user, mute the audio of the media, blur the media, distort the audio of the media, pause the media, trigger the deepfake detection AI-based model 108 to further scan the media, transmit information related to the media and/or the deepfake detection to an external device for further processing and/or training, etc. The deepfake detection circuitry 106 can utilize the user interface 110 for the applied mitigation technique. Further details related to deepfake mitigation is described above in conjunction with FIG. 2. In some examples, the deepfake mitigation circuitry 208 can remove the alert and/or reverse the mitigation technique in response to a subsequent change of the stereo indication based on real stereo. At block 332, the comparator circuitry 204 determines if there is a subsequent chunk of the audio signal available to process. If the comparator circuitry 204 determines that a subsequent chunk is available (block 332: YES), control returns to block 314 of FIG. 3A. If the comparator circuitry 204 determines that a subsequent chunk is not available (block 332: NO), the instructions end.

An example of code that the deepfake detection circuitry 106 may execute to perform deepfake detection based on audio characteristics is shown in the below Table 1.

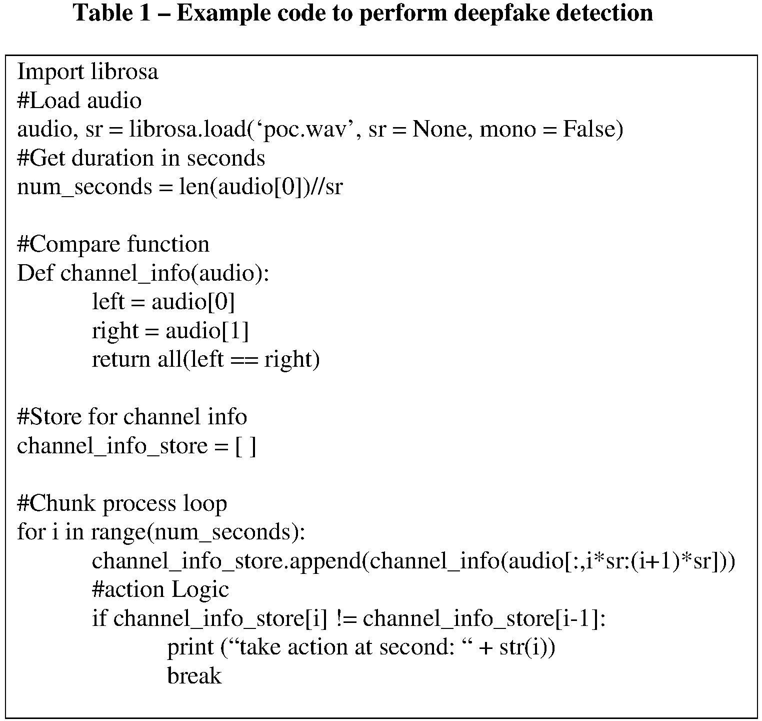

In the above Table 1, audio is loaded and a sampling rate (sr) for the chunks is determined. The sampling rate may be preset to the sampling rate of the audio or may be customized by a user. After the audio is loaded, the total number of chucks is determined by dividing the length of the media by the sample rate. The compare function portion of the code corresponds to the comparison of the first channel audio data to the second channel audio data. For example, the left channel float data for the audio is determined, the right channel float data from the audio is determined, and then the left channel float data is compared to the right channel float channel to output a bit or logic value (e.g., logic value high corresponding to fake stereo and logic value low corresponding to real stereo). The store for channel info store stores the deepfake indication value based on a comparison of a current stereo indication value to a previous stereo indication value. The chunk process loop is a function that stores the current stereo indication value of a comparison of left and right channel audio data and then compares the current stereo indication value to a previous stereo indication value. If the current stereo indication value is the same as the previous stereo indication value, the loop continues looping until a stereo indication mismatch of all chunks have been processed. If the current stereo indication value is different than the previous stereo indication value, the deepfake is flagged by printing the line "take action at second: str(i)" Where str(i) is the point in time at which the deepfake has been identified. Although Table 1 provides example code, the example code may be modified based on additional or alternative operations described herein.

FIG. 4 is a block diagram of an example programmable circuitry platform 400 structured to execute and/or instantiate the example machine-readable instructions and/or the example operations of FIGS. 3A and 3B to implement the deepfake detection circuitry 106 of FIG. 2. The programmable circuitry platform 400 can be, for example, a server, a personal computer, a workstation, a self-learning machine (e.g., a neural network), a mobile device (e.g., a cell phone, a smart phone, a tablet such as an iPad^{™}), an Internet appliance, a digital video recorder, a Blu-ray player, a gaming console, a personal video recorder, a set top box, a headset (e.g., an augmented reality (AR) headset, a virtual reality (VR) headset, etc.), or any other type of computing and/or electronic device.

The programmable circuitry platform 400 of the illustrated example includes programmable circuitry 412. The programmable circuitry 412 of the illustrated example is hardware. For example, the programmable circuitry 412 can be implemented by one or more integrated circuits, logic circuits, FPGAs, microprocessors, CPUs, GPUs, VPUs, DSPs, and/or microcontrollers from any desired family or manufacturer. The programmable circuitry 412 may be implemented by one or more semiconductor based (e.g., silicon based) devices. In this example, the programmable circuitry 412 implements the audio signal divider circuitry 202, the comparator circuitry 204, the storage 206, and/or the deepfake mitigation circuitry 208 of FIG. 2.

The programmable circuitry 412 of the illustrated example includes a local memory 413 (e.g., a cache, registers, etc.). The programmable circuitry 412 of the illustrated example is in communication with main memory 414, 416, which includes a volatile memory 414 and a non-volatile memory 416, by a bus 418. The volatile memory 414 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 416 may be implemented by flash memory and/or any other desired type of memory device. Access to the main memory 414, 416 of the illustrated example is controlled by a memory controller 417. In some examples, the memory controller 417 may be implemented by one or more integrated circuits, logic circuits, microcontrollers from any desired family or manufacturer, or any other type of circuitry to manage the flow of data going to and from the main memory 414, 416.

The programmable circuitry platform 400 of the illustrated example also includes interface circuitry 420. The interface circuitry 420 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCIe) interface.

In the illustrated example, one or more input devices 422 are connected to the interface circuitry 420. The input device(s) 422 permit(s) a user (e.g., a human user, a machine user, etc.) to enter data and/or commands into the programmable circuitry 412. The input device(s) 422 can be implemented by, for example, an audio sensor, a microphone, a camera (still or video), a keyboard, a button, a mouse, a touchscreen, a trackpad, and/or a voice recognition system.

One or more output devices 424 are also connected to the interface circuitry 420 of the illustrated example. The output device(s) 424 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, and/or speaker. The interface circuitry 420 of the illustrated example, thus, typically includes a graphics driver card, a graphics driver chip, and/or graphics processor circuitry such as a GPU.

The interface circuitry 420 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 426. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 400 of the illustrated example also includes one or more mass storage discs or devices 428 to store firmware, software, and/or data. Examples of such mass storage discs or devices 428 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine readable instructions 432, which may be implemented by the machine readable instructions of FIGS. 3A and 3B, may be stored in the mass storage device 428, in the volatile memory 414, in the non-volatile memory 416, and/or on at least one non-transitory computer readable storage medium such as a CD or DVD which may be removable.

FIG. 5 is a block diagram of an example implementation of the programmable circuitry 412 of FIG. 4. In this example, the programmable circuitry 412 of FIG. 4 is implemented by a microprocessor 500. For example, the microprocessor 500 may be a general-purpose microprocessor (e.g., general-purpose microprocessor circuitry). The microprocessor 500 executes some or all of the machine-readable instructions of the flowcharts of FIGS. 3A and 3B to effectively instantiate the circuitry of FIG. 2 as logic circuits to perform operations corresponding to those machine readable instructions. In some such examples, the circuitry of FIG. 2 is instantiated by the hardware circuits of the microprocessor 500 in combination with the machine-readable instructions. For example, the microprocessor 500 may be implemented by multi-core hardware circuitry such as a CPU, a DSP, a GPU, a VPU, an XPU, etc. Although it may include any number of example cores 502 (e.g., 1 core), the microprocessor 500 of this example is a multi-core semiconductor device including N cores. The cores 502 of the microprocessor 500 may operate independently or may cooperate to execute machine readable instructions. For example, machine code corresponding to a firmware program, an embedded software program, or a software program may be executed by one of the cores 502 or may be executed by multiple ones of the cores 502 at the same or different times. In some examples, the machine code corresponding to the firmware program, the embedded software program, or the software program is split into threads and executed in parallel by two or more of the cores 502. The software program may correspond to a portion or all of the machine readable instructions and/or operations represented by the flowcharts ofFIGS. 3A and 3B.

The cores 502 may communicate by a first example bus 504. In some examples, the first bus 504 may be implemented by a communication bus to effectuate communication associated with one(s) of the cores 502. For example, the first bus 504 may be implemented by at least one of an Inter-Integrated Circuit (I2C) bus, a Serial Peripheral Interface (SPI) bus, a PCI bus, or a PCIe bus. Additionally or alternatively, the first bus 504 may be implemented by any other type of computing or electrical bus. The cores 502 may obtain data, instructions, and/or signals from one or more external devices by example interface circuitry 506. The cores 502 may output data, instructions, and/or signals to the one or more external devices by the interface circuitry 506. Although the cores 502 of this example include example local memory 520 (e.g., Level 1 (L1) cache that may be split into an L1 data cache and an L1 instruction cache), the microprocessor 500 also includes example shared memory 510 that may be shared by the cores (e.g., Level 2 (L2 cache)) for highspeed access to data and/or instructions. Data and/or instructions may be transferred (e.g., shared) by writing to and/or reading from the shared memory 510. The local memory 520 of each of the cores 502 and the shared memory 510 may be part of a hierarchy of storage devices including multiple levels of cache memory and the main memory (e.g., the main memory 414, 416 of FIG. 4). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 502 may be referred to as a CPU, DSP, GPU, etc., or any other type of hardware circuitry. Each core 502 includes control unit circuitry 514, arithmetic and logic (AL) circuitry (sometimes referred to as an ALU) 516, a plurality of registers 518, the local memory 520, and a second example bus 522. Other structures may be present. For example, each core 502 may include vector unit circuitry, single instruction multiple data (SIMD) unit circuitry, load/store unit (LSU) circuitry, branch/jump unit circuitry, floating-point unit (FPU) circuitry, etc. The control unit circuitry 514 includes semiconductor-based circuits structured to control (e.g., coordinate) data movement within the corresponding core 502. The AL circuitry 516 includes semiconductor-based circuits structured to perform one or more mathematic and/or logic operations on the data within the corresponding core 502. The AL circuitry 516 of some examples performs integer based operations. In other examples, the AL circuitry 516 also performs floating-point operations. In yet other examples, the AL circuitry 516 may include first AL circuitry that performs integer-based operations and second AL circuitry that performs floating-point operations. In some examples, the AL circuitry 516 may be referred to as an Arithmetic Logic Unit (ALU).

The registers 518 are semiconductor-based structures to store data and/or instructions such as results of one or more of the operations performed by the AL circuitry 516 of the corresponding core 502. For example, the registers 518 may include vector register(s), SIMD register(s), general-purpose register(s), flag register(s), segment register(s), machine-specific register(s), instruction pointer register(s), control register(s), debug register(s), memory management register(s), machine check register(s), etc. The registers 518 may be arranged in a bank as shown in FIG. 5. Alternatively, the registers 518 may be organized in any other arrangement, format, or structure, such as by being distributed throughout the core 502 to shorten access time. The second bus 522 may be implemented by at least one of an I2C bus, a SPI bus, a PCI bus, or a PCIe bus.

Each core 502 and/or, more generally, the microprocessor 500 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 500 is a semiconductor device fabricated to include many transistors interconnected to implement the structures described above in one or more integrated circuits (ICs) contained in one or more packages.

The microprocessor 500 may include and/or cooperate with one or more accelerators (e.g., acceleration circuitry, hardware accelerators, etc.). In some examples, accelerators are implemented by logic circuitry to perform certain tasks more quickly and/or efficiently than can be done by a general-purpose processor. Examples of accelerators include ASICs and FPGAs such as those discussed herein. A GPU, DSP and/or other programmable device can also be an accelerator. Accelerators may be on-board the microprocessor 500, in the same chip package as the microprocessor 500 and/or in one or more separate packages from the microprocessor 500.

FIG. 6 is a block diagram of another example implementation of the programmable circuitry 412 of FIG. 4. In this example, the programmable circuitry 412 is implemented by FPGA circuitry 600. For example, the FPGA circuitry 600 may be implemented by an FPGA. The FPGA circuitry 600 can be used, for example, to perform operations that could otherwise be performed by the example microprocessor 500 of FIG. 5 executing corresponding machine readable instructions. However, once configured, the FPGA circuitry 600 instantiates the operations and/or functions corresponding to the machine readable instructions in hardware and, thus, can often execute the operations/functions faster than they could be performed by a general-purpose microprocessor executing the corresponding software.

More specifically, in contrast to the microprocessor 500 of FIG. 5 described above (which is a general purpose device that may be programmed to execute some or all of the machine readable instructions represented by the flowchart(s) of FIGS. 3A and 3B but whose interconnections and logic circuitry are fixed once fabricated), the FPGA circuitry 600 of the example of FIG. 6 includes interconnections and logic circuitry that may be configured, structured, programmed, and/or interconnected in different ways after fabrication to instantiate, for example, some or all of the operations/functions corresponding to the machine readable instructions represented by the flowchart(s) of FIGS. 3A and 3B. In particular, the FPGA circuitry 600 may be thought of as an array of logic gates, interconnections, and switches. The switches can be programmed to change how the logic gates are interconnected by the interconnections, effectively forming one or more dedicated logic circuits (unless and until the FPGA circuitry 600 is reprogrammed). The configured logic circuits enable the logic gates to cooperate in different ways to perform different operations on data received by input circuitry. Those operations may correspond to some or all of the instructions (e.g., the software and/or firmware) represented by the flowchart(s) of FIGS. 3A and 3B. As such, the FPGA circuitry 600 may be configured and/or structured to effectively instantiate some or all of the operations/functions corresponding to the machine readable instructions of the flowchart(s) of FIGS. 3A and 3B as dedicated logic circuits to perform the operations/functions corresponding to those software instructions in a dedicated manner analogous to an ASIC. Therefore, the FPGA circuitry 600 may perform the operations/functions corresponding to the some or all of the machine readable instructions of FIGS. 3A and 3B faster than the general-purpose microprocessor can execute the same.

In the example of FIG. 6, the FPGA circuitry 600 is configured and/or structured in response to being programmed (and/or reprogrammed one or more times) based on a binary file. In some examples, the binary file may be compiled and/or generated based on instructions in a hardware description language (HDL) such as Lucid, Very High Speed Integrated Circuits (VHSIC) Hardware Description Language (VHDL), or Verilog. For example, a user (e.g., a human user, a machine user, etc.) may write code or a program corresponding to one or more operations/functions in an HDL; the code/program may be translated into a low-level language as needed; and the code/program (e.g., the code/program in the low-level language) may be converted (e.g., by a compiler, a software application, etc.) into the binary file. In some examples, the FPGA circuitry 600 of FIG. 6 may access and/or load the binary file to cause the FPGA circuitry 600 of FIG. 6 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 600 of FIG. 6 to cause configuration and/or structuring of the FPGA circuitry 600 of FIG. 6, or portion(s) thereof.

In some examples, the binary file is compiled, generated, transformed, and/or otherwise output from a uniform software platform utilized to program FPGAs. For example, the uniform software platform may translate first instructions (e.g., code or a program) that correspond to one or more operations/functions in a high-level language (e.g., C, C++, Python, etc.) into second instructions that correspond to the one or more operations/functions in an HDL. In some such examples, the binary file is compiled, generated, and/or otherwise output from the uniform software platform based on the second instructions. In some examples, the FPGA circuitry 600 of FIG. 6 may access and/or load the binary file to cause the FPGA circuitry 600 of FIG. 6 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 600 of FIG. 6 to cause configuration and/or structuring of the FPGA circuitry 600 of FIG. 6, or portion(s) thereof.

The FPGA circuitry 600 of FIG. 6, includes example input/output (I/O) circuitry 602 to obtain and/or output data to/from example configuration circuitry 604 and/or external hardware 606. For example, the configuration circuitry 604 may be implemented by interface circuitry that may obtain a binary file, which may be implemented by a bit stream, data, and/or machine-readable instructions, to configure the FPGA circuitry 600, or portion(s) thereof. In some such examples, the configuration circuitry 604 may obtain the binary file from a user, a machine (e.g., hardware circuitry (e.g., programmable or dedicated circuitry) that may implement an Artificial Intelligence/Machine Learning (AI/ML) model to generate the binary file), etc., and/or any combination(s) thereof). In some examples, the external hardware 606 may be implemented by external hardware circuitry. For example, the external hardware 606 may be implemented by the microprocessor 500 of FIG. 5.

The FPGA circuitry 600 also includes an array of example logic gate circuitry 608, a plurality of example configurable interconnections 610, and example storage circuitry 612. The logic gate circuitry 608 and the configurable interconnections 610 are configurable to instantiate one or more operations/functions that may correspond to at least some of the machine readable instructions of FIGS. 3A and 3B and/or other desired operations. The logic gate circuitry 608 shown in FIG. 6 is fabricated in blocks or groups. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 608 to enable configuration of the electrical structures and/or the logic gates to form circuits to perform desired operations/functions. The logic gate circuitry 608 may include other electrical structures such as look-up tables (LUTs), registers (e.g., flip-flops or latches), multiplexers, etc.

The configurable interconnections 610 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 608 to program desired logic circuits.

The storage circuitry 612 of the illustrated example is structured to store result(s) of the one or more of the operations performed by corresponding logic gates. The storage circuitry 612 may be implemented by registers or the like. In the illustrated example, the storage circuitry 612 is distributed amongst the logic gate circuitry 608 to facilitate access and increase execution speed.

The example FPGA circuitry 600 of FIG. 6 also includes example dedicated operations circuitry 614. In this example, the dedicated operations circuitry 614 includes special purpose circuitry 616 that may be invoked to implement commonly used functions to avoid the need to program those functions in the field. Examples of such special purpose circuitry 616 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 600 may also include example general purpose programmable circuitry 618 such as an example CPU 620 and/or an example DSP 622. Other general purpose programmable circuitry 618 may additionally or alternatively be present such as a GPU, an XPU, etc., that can be programmed to perform other operations.

Although FIGS. 5 and 6 illustrate two example implementations of the programmable circuitry 412 of FIG. 4, many other approaches are contemplated. For example, FPGA circuitry may include an on-board CPU, such as one or more of the example CPU 620 of FIG. 5. Therefore, the programmable circuitry 412 of FIG. 4 may additionally be implemented by combining at least the example microprocessor 500 of FIG. 5 and the example FPGA circuitry 600 of FIG. 6. In some such hybrid examples, one or more cores 502 of FIG. 5 may execute a first portion of the machine readable instructions represented by the flowchart(s) ofFIGS. 3A and 3B to perform first operation(s)/function(s), the FPGA circuitry 600 of FIG. 6 may be configured and/or structured to perform second operation(s)/function(s) corresponding to a second portion of the machine readable instructions represented by the flowcharts of FIGS. 3A and 3B, and/or an ASIC may be configured and/or structured to perform third operation(s)/function(s) corresponding to a third portion of the machine readable instructions represented by the flowcharts of FIGS. 3A and 3B.

It should be understood that some or all of the circuitry of FIG. 2 may, thus, be instantiated at the same or different times. For example, same and/or different portion(s) of the microprocessor 500 of FIG. 5 may be programmed to execute portion(s) of machine-readable instructions at the same and/or different times. In some examples, same and/or different portion(s) of the FPGA circuitry 600 of FIG. 6 may be configured and/or structured to perform operations/functions corresponding to portion(s) of machine-readable instructions at the same and/or different times.

In some examples, some or all of the circuitry of FIG. 2 may be instantiated, for example, in one or more threads executing concurrently and/or in series. For example, the microprocessor 500 of FIG. 5 may execute machine readable instructions in one or more threads executing concurrently and/or in series. In some examples, the FPGA circuitry 600 of FIG. 6 may be configured and/or structured to carry out operations/functions concurrently and/or in series. Moreover, in some examples, some or all of the circuitry of FIG. 2 may be implemented within one or more virtual machines and/or containers executing on the microprocessor 500 of FIG. 5.

In some examples, the programmable circuitry 412 of FIG. 4 may be in one or more packages. For example, the microprocessor 500 of FIG. 5 and/or the FPGA circuitry 600 of FIG. 6 may be in one or more packages. In some examples, an XPU may be implemented by the programmable circuitry 412 of FIG. 4, which may be in one or more packages. For example, the XPU may include a CPU (e.g., the microprocessor 500 of FIG. 5, the CPU 620 of FIG. 6, etc.) in one package, a DSP (e.g., the DSP 622 of FIG. 6) in another package, a GPU in yet another package, and an FPGA (e.g., the FPGA circuitry 600 of FIG. 6) in still yet another package.

A block diagram illustrating an example software distribution platform 705 to distribute software such as the example machine readable instructions 432 of FIG. 4 to other hardware devices (e.g., hardware devices owned and/or operated by third parties from the owner and/or operator of the software distribution platform) is illustrated in FIG. 7. The example software distribution platform 705 may be implemented by any computer server, data facility, cloud service, etc., capable of storing and transmitting software to other computing devices. The third parties may be customers of the entity owning and/or operating the software distribution platform 705. For example, the entity that owns and/or operates the software distribution platform 705 may be a developer, a seller, and/or a licensor of software such as the example machine readable instructions 432 of FIG. 4. The third parties may be consumers, users, retailers, OEMs, etc., who purchase and/or license the software for use and/or re-sale and/or sub-licensing. In the illustrated example, the software distribution platform 705 includes one or more servers and one or more storage devices. The storage devices store the machine readable instructions 432, which may correspond to the example machine readable instructions of FIGS. 3A and 3B, as described above. The one or more servers of the example software distribution platform 705 are in communication with an example network 710, which may correspond to any one or more of the Internet and/or any of the example networks described above. In some examples, the one or more servers are responsive to requests to transmit the software to a requesting party as part of a commercial transaction. Payment for the delivery, sale, and/or license of the software may be handled by the one or more servers of the software distribution platform and/or by a third party payment entity. The servers enable purchasers and/or licensors to download the machine readable instructions 432 from the software distribution platform 705. For example, the software, which may correspond to the example machine readable instructions of FIGS. 3A and 3B, may be downloaded to the example programmable circuitry platform 400, which is to execute the machine readable instructions 432 to implement the deepfake detection circuitry 106. In some examples, one or more servers of the software distribution platform 705 periodically offer, transmit, and/or force updates to the software (e.g., the example machine readable instructions 432 of FIG. 4) to ensure improvements, patches, updates, etc., are distributed and applied to the software at the end user devices. Although referred to as software above, the distributed "software" could alternatively be firmware.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities, etc., the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities, etc., the phrase "at least one of A or B" is intended to refer to implementations including any of (1) at least one A, (2) at least one B, or (3) at least one A and at least one B.

As used herein, singular references (e.g., "a," "an," "first," "second," etc.) do not exclude a plurality. The term "a" or "an" object, as used herein, refers to one or more of that object. The terms "a" (or "an"), "one or more," and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

As used herein, unless otherwise stated, the term "above" describes the relationship of two parts relative to Earth. A first part is above a second part, if the second part has at least one part between Earth and the first part. Likewise, as used herein, a first part is "below" a second part when the first part is closer to the Earth than the second part. As noted above, a first part can be above or below a second part with one or more of: other parts therebetween, without other parts therebetween, with the first and second parts touching, or without the first and second parts being in direct contact with one another.

As used in this patent, stating that any part (e.g., a layer, film, area, region, or plate) is in any way on (e.g., positioned on, located on, disposed on, or formed on, etc.) another part, indicates that the referenced part is either in contact with the other part, or that the referenced part is above the other part with one or more intermediate part(s) located therebetween.

As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein "substantially real time" refers to occurrence in a near instantaneous manner recognizing there may be real world delays for computing time, transmission, etc. Thus, unless otherwise specified, "substantially real time" refers to real time + 1 second.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein, integrated circuit/circuitry is defined as one or more semiconductor packages containing one or more circuit elements such as transistors, capacitors, inductors, resistors, current paths, diodes, etc. For example, an integrated circuit may be implemented as one or more of an ASIC, an FPGA, a chip, a microchip, programmable circuitry, a semiconductor substrate coupling multiple circuit elements, a system on chip (SoC), etc.

Example methods, apparatus, systems, and articles of manufacture to perform deepfake detection based on audio characteristics are disclosed herein. Further examples and combinations thereof include the following: Example 1 includes an apparatus comprising interface circuitry to obtain an audio signal, the audio signal including a first channel of audio data and a second channel of audio data, computer readable instructions, and at least one programmable circuit determine a first value by comparing a first subset of the first channel of the audio data to a first subset of the second channel of the audio data, the first subset of the first channel of the audio data and the first subset of the second channel of the audio data corresponding to a first duration of time, and determine a second value by comparing a second subset of the first channel of the audio data to a second subset of the second channel of the audio data, the second subset of the first channel of the audio data and the second subset of the second channel of the audio data corresponding to a second duration of time, and tag media as a deepfake based on the first value mismatching the second value.

Example 2 includes the apparatus of example 1, wherein the first value has (a) a first logic value when the first subset of the first channel matches the first subset of the second channel or (b) a second logic value when the first subset of the first channel mismatches the first subset of the second channel, and the second value has s a (a) the first logic value when the second subset of the first channel matches the second subset of the second channel or (b) the second logic value when the second subset of the first channel mismatches the second subset of the second channel.

Example 3 includes the apparatus of any one of examples 1-2, wherein the first logic value corresponds to fake stereo audio and the second logic value corresponds to real stereo audio.

Example 4 includes the apparatus of any one of examples 1-3, wherein one or more of the at least one programmable circuit is to divide the audio signal into subsets, the subsets including the first subset and the second subset of the audio signal.

Example 5 includes the apparatus of any one of examples 1-4, wherein one or more of the at least one programmable circuit is to perform an action based on the tagging of the media as deepfake.

Example 6 includes the apparatus of any one of examples 1-5, wherein the action is outputting an alert to a user.

Example 7 includes the apparatus of any one of examples 1-6, wherein the action is triggering an artificial intelligence-based model to analyze the media.

Example 8 includes the apparatus of any one of examples 1-7, wherein the action is to cause transmission of information related to the deepfake to a server.

Example 9 includes the apparatus of any one of examples 1-8, wherein the second duration of time is after the first duration of time.

Example 10 includes the apparatus of any one of examples 1-9, wherein one or more of the at least one programmable circuit is to compare the first subset of the first channel of the audio data to the first subset of the second channel of the audio data by comparing first float values of the first subset of the first channel of the audio data to second float values of the first subset of the second channel of the audio data.

Example 11 includes a non-transitory machine readable storage medium comprising instructions to cause at least one programmable circuit to at least determine a first value by comparing a first subset of a first channel of audio data to a first subset of a second channel of the audio data, the first subset of the first channel of the audio data and the first subset of the second channel of the audio data corresponding to a first duration of time, and determine a second value by comparing a second subset of the first channel of the audio data to a second subset of the second channel of the audio data, the second subset of the first channel of the audio data and the second subset of the second channel of the audio data corresponding to a second duration of time, and tag media corresponding to the audio data as a deepfake based on the first value mismatching the second value.

Example 12 includes the non-transitory machine readable storage medium of example 11, wherein the first value has (a) a first logic value when the first subset of the first channel matches the first subset of the second channel or (b) a second logic value when the first subset of the first channel mismatches the first subset of the second channel, and the second value has a (a) the first logic value when the second subset of the first channel matches the second subset of the second channel or (b) the second logic value when the second subset of the first channel mismatches the second subset of the second channel.

Example 13 includes the non-transitory machine readable storage medium of any ones of example 11-12, wherein the first logic value corresponds to fake stereo audio and the second logic value corresponds to real stereo audio.

Example 14 includes the non-transitory machine readable storage medium of any ones of example 11-13, wherein the instructions cause one or more of the at least one programmable circuit to divide the audio data into subsets, the subsets including the first subset and the second subset of the audio data.

Example 15 includes the non-transitory machine readable storage medium of any ones of example 11-14, the instructions cause one or more of the at least one programmable circuit to perform an action based on the tagging of the media as deepfake.

Example 16 includes the non-transitory machine readable storage medium of any ones of example 11-15, wherein the action is outputting an alert to a user.

Example 17 includes the non-transitory machine readable storage medium of any ones of example 11-16, wherein the action is triggering an artificial intelligence-based model to analyze the media.

Example 18 includes the non-transitory machine readable storage medium of any ones of example 11-17, wherein the action is to cause transmission of information related to the media to a server.

Example 19 includes a method comprising determining, by executing an instruction with one at least one programmable circuit, a first stereo indication by comparing a first subset of a first channel of audio data to a first subset of a second channel of the audio data, the first subset of the first channel of the audio data and the first subset of the second channel of the audio data corresponding to a first duration of time, and determining, by executing an instruction with one or more of the at least one programmable circuit, a second stereo indication by comparing a second subset of the first channel of the audio data to a second subset of the second channel of the audio data, the second subset of the first channel of the audio data and the second subset of the second channel of the audio data corresponding to a second duration of time, and tagging, by executing an instruction with one or more of the at least one programmable circuit, media corresponding to the audio data as a deepfake based on the first stereo indication mismatching the second stereo indication.

Example 20 includes the method of example 19, wherein the first stereo indication has (a) a fake stereo indication when the first subset of the first channel matches the first subset of the second channel or (b) a real stereo indication when the first subset of the first channel mismatches the first subset of the second channel, and the second stereo indication has a (a) the fake stereo indication when the second subset of the first channel matches the second subset of the second channel or (b) the real stereo indication when the second subset of the first channel mismatches the second subset of the second channel.

From the foregoing, it will be appreciated that example systems, apparatus, articles of manufacture, and methods have been disclosed that perform deepfake detection based on audio characteristics. Disclosed systems, apparatus, articles of manufacture, and methods improve the efficiency of using a computing device by identifying deepfake media using substantially less resources than larger and more complicated deepfake detection models, such as AI-based models. Accordingly, examples disclosed herein conserve resources, power, memory, etc. Disclosed systems, apparatus, articles of manufacture, and methods are accordingly directed to one or more improvement(s) in the operation of a machine such as a computer or other electronic and/or mechanical device.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

## Claims

1. An apparatus comprising:
interface circuitry to obtain an audio signal, the audio signal including a first channel of audio data and a second channel of audio data;
computer readable instructions; and
at least one programmable circuit:
determine a first value by comparing a first subset of the first channel of the audio data to a first subset of the second channel of the audio data, the first subset of the first channel of the audio data and the first subset of the second channel of the audio data corresponding to a first duration of time; and
determine a second value by comparing a second subset of the first channel of the audio data to a second subset of the second channel of the audio data, the second subset of the first channel of the audio data and the second subset of the second channel of the audio data corresponding to a second duration of time; and tag media as a deepfake based on the first value mismatching the second value.

2. The apparatus of claim 1, wherein:
the first value has (a) a first logic value when the first subset of the first channel matches the first subset of the second channel or (b) a second logic value when the first subset of the first channel mismatches the first subset of the second channel; and
the second value has (a) the first logic value when the second subset of the first channel matches the second subset of the second channel or (b) the second logic value when the second subset of the first channel mismatches the second subset of the second channel.

3. The apparatus of claim 2, wherein the first logic value corresponds to fake stereo audio and the second logic value corresponds to real stereo audio.

4. The apparatus of claim 1, wherein one or more of the at least one programmable circuit is to divide the audio signal into subsets, the subsets including the first subset and the second subset of the audio signal.

5. The apparatus of claim 1, wherein one or more of the at least one programmable circuit is to perform an action based on the tagging of the media as deepfake.

6. The apparatus of claim 5, wherein the action is outputting an alert to a user.

7. The apparatus of claim 5, wherein the action is triggering an artificial intelligence-based model to analyze the media.

8. The apparatus of claim 5, wherein the action is to cause transmission of information related to the deepfake to a server.

9. The apparatus of claim 1, wherein the second duration of time is after the first duration of time.

10. The apparatus of claim 1, wherein one or more of the at least one programmable circuit is to compare the first subset of the first channel of the audio data to the first subset of the second channel of the audio data by comparing first float values of the first subset of the first channel of the audio data to second float values of the first subset of the second channel of the audio data.

11. A machine readable storage medium comprising instructions to cause at least one programmable circuit to at least:
determine a first value by comparing a first subset of a first channel of audio data to a first subset of a second channel of the audio data, the first subset of the first channel of the audio data and the first subset of the second channel of the audio data corresponding to a first duration of time; and
determine a second value by comparing a second subset of the first channel of the audio data to a second subset of the second channel of the audio data, the second subset of the first channel of the audio data and the second subset of the second channel of the audio data corresponding to a second duration of time; and
tag media corresponding to the audio data as a deepfake based on the first value mismatching the second value.

12. The machine readable storage medium of claim 11, wherein:
the first value has (a) a first logic value when the first subset of the first channel matches the first subset of the second channel or (b) a second logic value when the first subset of the first channel mismatches the first subset of the second channel; and
the second value has (a) the first logic value when the second subset of the first channel matches the second subset of the second channel or (b) the second logic value when the second subset of the first channel mismatches the second subset of the second channel.

13. The machine readable storage medium of claim 12, wherein the first logic value corresponds to fake stereo audio and the second logic value corresponds to real stereo audio.

14. The machine readable storage medium of claim 11, wherein the instructions cause one or more of the at least one programmable circuit to divide the audio data into subsets, the subsets including the first subset and the second subset of the audio data.

15. A method comprising:
determining, by executing an instruction with one at least one programmable circuit, a first stereo indication by comparing a first subset of a first channel of audio data to a first subset of a second channel of the audio data, the first subset of the first channel of the audio data and the first subset of the second channel of the audio data corresponding to a first duration of time; and
determining, by executing an instruction with one or more of the at least one programmable circuit, a second stereo indication by comparing a second subset of the first channel of the audio data to a second subset of the second channel of the audio data, the second subset of the first channel of the audio data and the second subset of the second channel of the audio data corresponding to a second duration of time; and
tagging, by executing an instruction with one or more of the at least one programmable circuit, media corresponding to the audio data as a deepfake based on the first stereo indication mismatching the second stereo indication.
